# FASCICULE DE BREVET EUROPEEN

(11) **EP 3 068 827 B1**
(45) Date de publication et mention de la délivrance du brevet: **21.02.2018**
(21) Numéro de dépôt: 14798843.0
(22) Date de dépôt: 13.11.2014
(51) Int. Cl.: C08K 3/06, C08L 9/06, C08L 23/08, C08L 53/02, C08L 95/00

(54) **COMPOSITION BITUME/POLYMERE A PROPRIETES MECANIQUES A FROID AMELIOREES**
BITUMEN / POLYMER COMPOSITION WITH IMPROVED MECHANICAL PROPERTIES IN THE COLD
BITUMENPOLYMERZUSAMMENSETZUNG MIT VERBESSERTEN MECHANISCHEN KÄLTEEIGENSCHAFTEN

(30) Priorité: 14.11.2013 FR 1361153
(43) Date de publication de la demande: 21.09.2016
(73) Titulaire: Total Marketing Services, 92800 Puteaux (FR)
(72) Inventeur: MOUAZEN, Mouhamad, F-69008 Lyon (FR); BOTEL, Romuald, F-38121 Chonas l'Amballan (FR); RUOT, Carole, F-69540 Irigny (FR); CHAMINAND, Julien, F-69120 Vaulx en Velin (FR); DRIDI, Nour, F-69520 Grigny (FR)
(74) Mandataire: GIE Innovation Competence Group
(86) Numéro de dépôt international: PCT/EP2014/074511
(87) Numéro de publication internationale: WO 2015/071370

(56) Documents cités:
- WO-A1-97/43342
- S. KEYF: "The modification of bitumen with reactive ethylene terpolymer, styrene butadiene styrene and variable amounts of ethylene vinyl acetate", RESEARCH ON CHEMICAL INTERMEDIATES, 6 juin 2013 (2013-06-06), XP055126286, ISSN: 0922-6168, DOI: 10.1007/s11164-013-1287-9

## Description

### DOMAINE TECHNIQUE

La présente invention appartient au domaine des bitumes. Plus spécifiquement, elle concerne des compositions bitume/polymère ayant des propriétés mécaniques à froid améliorées.

L'invention concerne également l'utilisation de ces compositions dans les domaines des applications routières, notamment dans la fabrication de liants routiers tels que les enrobés à chaud, les enrobés à froid ou les enduits superficiels, et dans les domaines des applications industrielles, par exemple dans la fabrication de revêtements intérieurs et extérieurs.

### ART ANTERIEUR

De nombreux travaux ont porté sur l'amélioration des propriétés mécaniques, élastiques et/ou rhéologiques de compositions bitumineuses. Des compositions bitume/polymère présentant des propriétés améliorées ainsi que leur procédé de préparation ont été largement décrites dans la littérature.

Parmi les polymères ajoutés aux bitumes, les copolymères statistiques ou séquencés de styrène et d'un diène conjugué et, notamment, de styrène et de butadiène ou de styrène et d'isoprène sont connus pour être particulièrement efficaces car ils se mélangent très facilement dans les bitumes et leur confèrent d'excellentes propriétés mécaniques et dynamiques et notamment de très bonnes propriétés de viscoélasticité.

On sait en outre que la stabilité des compositions bitume/polymère peut être améliorée par couplage chimique du polymère au bitume. Ce couplage chimique réalisé classiquement par réticulation du polymère permet en outre d'élargir le domaine d'utilisation des compositions bitume/polymère. On peut citer les documents FR2376188, FR2429241, FR2528439 et EP0360656, à titre d'exemple de procédé faisant intervenir un copolymère statistique ou séquencé de styrène et d'un diène conjugué réticulé au soufre. Le document FR2528439 traite en particulier de la réticulation avec un polysulfure. Le document EP0360656 décrit l'utilisation d'un accélérateur de vulcanisation donneur de soufre utilisé seul ou en association avec du soufre chimiquement non lié et/ou un polysulfure ou un accélérateur de vulcanisation non donneur de soufre.

Ces compositions bitume/polymère sont utilisées pour la préparation de liants pour des revêtements de surfaces diverses et, en particulier, comme revêtements superficiels routiers, à condition que ces compositions présentent en combinaison un certain nombre de caractéristiques mécaniques et/ou dynamiques. Des caractéristiques mécaniques optimisées telles que les propriétés mécaniques à froid sont notamment cruciales pour les applications dans les revêtements routiers.

Le brevet EP0739386 décrit des compositions bitume/polymère contenant un élastomère et une polyoléfine fonctionnalisée particulière. Les auteurs ont montré qu'une telle association permet d'améliorer la consistance, la susceptibilité thermique et les propriétés mécaniques en traction des compositions bitume/polymère réticulé.

Dans le cadre de ses travaux, la demanderesse s'est intéressée à améliorer les propriétés mécaniques à froid des compositions bitume/polymère, de préférence des compositions bitume/polymère réticulé, sans détériorer les autres propriétés mécaniques, notamment la consistance.

La présente invention vise l'obtention de compositions bitume/polymère présentant des propriétés de résistance à la fissuration, en particulier un point de fragilité Fraass selon la norme EN 12593 inférieure ou égal à -11°C, plus préférentiellement inférieure ou égale à - 13°C.

Un autre objectif de l'invention est d'améliorer les propriétés de résistance à la fissuration, en particulier le point de fragilité Fraass, sans détériorer la consistance de compositions bitume/polymère selon l'art antérieur.

Un autre objectif de l'invention est de proposer un procédé simple de préparation de compositions bitume/polymère, dont la résistance à la fissuration est améliorée.

### BREVE DESCRIPTION

Selon l'invention, le but de l'invention est atteint par une composition bitume/polymère comprenant du bitume, un élastomère et un adjuvant polymère oléfinique fonctionnalisé par au moins des groupements fonctionnels glycidyle. Le bitume comprend au moins :
- une première base bitume ayant une stabilité intrinsèque S supérieure à 2,5 et/ou un taux de peptisation Sₐ supérieur à 0,60 et,
- une deuxième base bitume ayant une stabilité intrinsèque S inférieure ou égale à 2,50 et/ou un taux de peptisation Sₐ inférieur ou égal à 0,60,
lesdites valeurs S et Sₐ étant mesurées selon la norme ASTM D 7157-12.

Selon un mode de réalisation préférentiel, la première base bitume a une stabilité intrinsèque S supérieure à 3,0 et/ou un taux de peptisation Sₐ supérieur à 0,65 et la deuxième base bitume a une stabilité intrinsèque S inférieure ou égale à 3,0 et/ou un taux de peptisation Sₐ inférieur ou égal à 0,65, lesdites valeurs S et Sₐ étant mesurées selon la norme ASTM D 7157-12.

Selon un autre mode de réalisation préférentiel, la première base bitume a une stabilité intrinsèque S supérieure à 3,5 et/ou un taux de peptisation Sₐ supérieur à 0,7 et la deuxième base bitume a une stabilité intrinsèque S inférieure ou égale à 3,5 et/ou un taux de peptisation Sₐ inférieur ou égal à 0,70, lesdites valeurs S et Sₐ étant mesurées selon la norme ASTM D 7157-12.

Selon un mode de réalisation particulier, le pourcentage massique de la deuxième base bitume par rapport à la masse totale de ladite composition est inférieure ou égale à 50%, de préférence compris entre 25% et 50%, plus préférentiellement entre 25% et 40%.

Selon un autre mode de réalisation particulier, la première base bitume est choisie parmi les résidus de distillation directe et/ou sous vide du pétrole, lesdits résidus étant éventuellement soufflés et/ou désasphaltés.

Selon un autre mode de réalisation préférentiel, la première base bitume est choisie parmi les résidus de distillation sous vide (RSV) des résidus atmosphériques provenant de la distillation directe du pétrole. On les nomme pour des raisons de simplicité, des résidus sous vide RSV.

Selon un autre mode de réalisation préférentiel, la deuxième base bitume est choisie parmi les produits issus de la viscoréduction de résidus de distillation sous vide, lesdits résidus de distillation sous vide (RSV) provenant de la distillation sous vide de résidus atmosphériques issus de la distillation directe du pétrole. On les nomme pour des raisons de simplicité, des résidus de distillation sous vide viscoréduits.

Selon une variante, la composition bitume/polymère comprend entre 0,05% et 15% en masse, de préférence entre 0,1% et 5% en masse, plus préférentiellement entre 0,1% et 2% en masse de l'adjuvant polymère oléfinique par rapport à la masse totale de ladite composition.

Selon un mode de réalisation particulier préférentiel, l'adjuvant polymère oléfinique est choisi parmi dans le groupe consistant en :
(a) les copolymères statistiques ou séquencés, de préférence statistiques, d'éthylène et d'un monomère choisi parmi l'acrylate de glycidyle et le méthacrylate de glycidyle, comprenant de 50% à 99,7% en masse, de préférence de 60% à 95% en masse, plus préférentiellement 60% à 90% en masse d'éthylène;
(b) les terpolymères statistiques ou séquencés, de préférence statistiques, d'éthylène, d'un monomère A choisi parmi l'acétate de vinyle et les acrylates ou méthacrylates d'alkyle en C₁ à C₆ et d'un monomère B choisi parmi l'acrylate de glycidyle et le méthacrylate de glycidyle, comprenant de 0,5% à 40% en masse, de préférence de 5 à 35% masse, plus préférentiellement de 10% à 30% en masse de motifs issus du monomère A et, de 0,5% à 15% en masse, de préférence de 2,5% à 15% en masse de motifs issus du monomère B, le reste étant formé de motifs issus de l'éthylène ; et
(c) les copolymères résultant du greffage d'un monomère B choisi parmi l'acrylate de glycidyle et le méthacrylate de glycidyle, sur un substrat consistant en un polymère choisi parmi les polyéthylènes, notamment les polyéthylènes basse densité, les polypropylènes, les copolymères statistiques ou séquencés, de préférence statistiques, d'éthylène et d'acétate de vinyle et les copolymère statistiques ou séquencés, de préférence statistiques, d'éthylène et d'acrylate ou méthacrylate d'alkyle en C₁ à C₆, comprenant de 40% à 99,7% en masse, de préférence de 50% à 99% en masse d'éthylène, lesdits copolymères greffés comprenant de 0,5% à 15% en masse, de préférence de 2,5% à 15% en masse de motifs greffés issus du monomère B.

Selon une variante préférée, l'adjuvant polymère oléfinique est choisi parmi les terpolymères statistiques ou séquencés, de préférence statistiques, d'éthylène, d'un monomère A choisi parmi l'acétate de vinyle et les acrylates ou méthacrylates d'alkyle en C₁ à C₆ et d'un monomère B choisi parmi l'acrylate de glycidyle et le méthacrylate de glycidyle, comprenant de 0,5% à 40% en masse, de préférence de 5 à 35% masse, plus préférentiellement de 10% à 30% en masse de motifs issus du monomère A et, de 0,5% à 15% en masse, de préférence de 2,5% à 15% en masse de motifs issus du monomère B, le reste étant formé de motifs issus de l'éthylène.

Avantageusement, l'adjuvant polymère oléfinique est choisi parmi les terpolymères statistiques d'éthylène, d'un monomère A choisi parmi les acrylates ou méthacrylates d'alkyle en C₁ à C₆ et d'un monomère B choisi parmi l'acrylate de glycidyle et le méthacrylate de glycidyle, comprenant de 0,5% à 40% en masse, de préférence de 5 à 35% masse, plus préférentiellement de 10% à 30% en masse de motifs issus du monomère A et, de 0,5% à 15% en masse, de préférence de 2,5% à 15% en masse de motifs issus du monomère B, le reste étant formé de motifs issus de l'éthylène.

Selon un mode de réalisation particulier, la composition bitume/polymère comprend entre 0,5% à 10% en masse, de préférence entre 1% à 6% en masse, plus préférentiellement entre 1,5% à 4% en masse d'élastomère par rapport à la masse totale de ladite composition.

Selon un mode de réalisation particulier préférentiel, l'élastomère est choisi parmi les copolymères statistiques ou séquencés d'un hydrocarbure monovinyl aromatique et d'un diène conjugué.

Selon un mode de réalisation particulier, l'élastomère comprend entre 5 % et 50% en masse, de préférence entre 15% et 40% en masse d'hydrocarbure monovinyl aromatique.

Avantageusement, l'élastomère est choisi parmi les copolymères statistiques ou séquencés de styrène et d'un diène conjugué, de préférence le butadiène.

Selon une variante, l'élastomère est choisi parmi les copolymères statistiques ou séquencés de styrène et de butadiène renfermant de 50% à 95%, plus particulièrement de 60% à 95% en masse de motifs issus du butadiène. En outre, la proportion de motifs à double liaison 1,2 issus du butadiène peut, avantageusement, être comprise entre 12% et 50%. L'élastomère peut, par exemple, être un copolymère styrène/butadiène de type haut vinyle c'est-à-dire ayant une teneur en double liaison 1,2 issus du butadiène supérieure à 20% en masse dudit copolymère.

Selon une variante, la masse moléculaire moyenne en masse de l'élastomère est comprise entre 10 000 et 600 000 daltons, de préférence entre 30 000 et 400 000 daltons.

Selon un mode de réalisation particulier, l'élastomère est choisi parmi les élastomères réticulables au soufre.

Selon un autre mode de réalisation particulier, l'élastomère est choisi parmi les élastomères réticulables thermiquement, c'est-à-dire pouvant être réticulés sans agent de réticulation (ou agent de couplage chimique), étant entendu qu'un même élastomère peut à la fois être réticulable au soufre et thermiquement. On peut citer le document WO2011013073 cité à titre d'exemple et/ou incorporé par référence dans la présente demande qui décrit un procédé de réticulation thermique ainsi que des élastomères réticulables thermiquement.

Selon l'invention, le but de l'invention est également atteint par un procédé de préparation d'une composition bitume/polymère. Le procédé de préparation comprend la mise en contact, en opérant à des températures comprises entre 100°C et 200°C, de préférence entre 150°C à 200°C, plus préférentiellement entre 160°C et 200°C, et sous agitation pendant une durée d'au moins 10 minutes, de préférence comprise entre 1 heure et 10 heures, plus préférentiellement entre 2 heures et 6 heures :
- du bitume,
- entre 0,5% et 10% en masse, de préférence entre 1% et 6% en masse, plus préférentiellement entre 1,5% à 4% en masse d'un élastomère,
- entre 0,05% et 15% en masse, de préférence entre 0,1 et 5% en masse, plus préférentiellement entre 0,1% à 2% en masse d'un adjuvant polymère oléfinique,
Lesdits bitume, élastomère et adjuvant polymère oléfinique étant tels que définis ci-dessus.

Selon un développement, l'élastomère est choisi parmi les élastomères réticulables au soufre. Le procédé comprend, en outre, la réticulation de l'élastomère par un agent de couplage donneur de soufre ajouté en quantité propre à fournir de 0,1% à 20% en masse de soufre libre par rapport à la masse d'élastomère réticulable au soufre dans la composition bitume/polymère.

Avantageusement, l'agent de couplage donneur de soufre est choisi dans le groupe consistant en le soufre élémentaire, les polysulfures d'hydrocarbyle, les accélérateurs de vulcanisation donneurs de soufre, les mélanges de tels produits entre eux et/ou avec des accélérateurs de vulcanisation non donneurs de soufre.

L'invention concerne également l'utilisation d'une composition bitume/polymère telle que décrite ci-dessus, pour préparer un revêtement d'étanchéité, une membrane ou une couche d'imprégnation.

Le but de l'invention est également atteint par un liant bitume/polymère comprenant une composition bitume/polymère tels que définis ci-dessus.

En particulier, le but de l'invention est atteint par un asphalte comprenant un liant bitume/polymère tel que décrit ci-dessus, et des charges minérales et/ou synthétiques telles que des fines, du sable ou des gravillons.

Selon l'invention, le but de l'invention est également atteint par un enrobé bitumineux comprenant un liant bitume/polymère tel que décrit ci-dessus, des granulats, et éventuellement des charges minérales et/ou synthétiques, de préférence choisies parmi des fines, du sable, des gravillons et des fraisats de recyclage.

L'invention concerne également l'utilisation d'un liant bitume/polymère tel que décrit ci-dessus pour préparer un enduit superficiel, un enrobé à chaud, un enrobé à froid, un enrobé coulé à froid, une grave émulsion ou une couche de roulement, ledit liant étant associé à des granulats et/ou des fraisats de recyclage.

### DESCRIPTION DETAILLEE

D'autres avantages et caractéristiques ressortiront plus clairement de la description qui va suivre et dont les modes particuliers de réalisation de l'invention sont donnés à titre d'exemples non limitatifs.

Selon un mode de réalisation particulier, on prépare une composition bitume/polymère en mettant en contact :
- du bitume,
- entre 0,5% et 10% en masse, de préférence entre 1% et 6% en masse, plus préférentiellement entre 1,5% à 4% en masse d'un élastomère,
- entre 0,05% et 15% en masse, de préférence entre 0,1 et 5% en masse, plus préférentiellement entre 0,1% à 2% en masse d'un adjuvant polymère oléfinique.

Les pourcentages massiques sont calculés par rapport à la masse totale de ladite composition.

On opère à des températures comprises entre 100°C et 200°C, de préférence entre 150°C à 200°C, plus préférentiellement entre 160°C et 200°C, et sous agitation pendant une durée d'au moins 10 minutes, de préférence comprise entre 1 heure et 10 heures, plus préférentiellement entre 2 heures et 6 heures.

La demanderesse a découvert que l'utilisation d'un bitume spécifique en association avec un adjuvant polymère particulier pour la préparation des compositions bitume/polymère permet d'améliorer de façon surprenante les propriétés de résistance à la fissuration de ladite composition bitume/polymère. En effet, la demanderesse a mis en évidence un effet synergique particulier induit par l'utilisation conjointe d'un bitume particulier et d'un adjuvant polymère spécifique.

On entend par bitume un composé formé par une ou plusieurs bases bitume.

Les bases bitume selon la présente invention sont choisies parmi les bases bitume provenant du raffinage du pétrole brut, en particulier des bases bitume contenant des asphaltènes. Les bases bitume peuvent être obtenues par des procédés conventionnels de fabrication des bitumes en raffinerie. On distingue notamment les bases bitume correspondant aux résidus de distillation directe et/ou aux résidus de distillation sous vide du pétrole. Il est en particulier courant de procéder à la distillation sous vide des résidus atmosphériques provenant de la distillation atmosphérique de pétrole brut. Ce procédé de fabrication correspond, par conséquent, à la succession d'une distillation atmosphérique et d'une distillation sous vide, la charge alimentant la distillation sous vide correspondant au résidu atmosphérique. Ces résidus sous vide issus de la tour de distillation sous vide peuvent également être utilisés comme bases bitume. En outre, ces résidus peuvent éventuellement subir d'autres traitements pour modifier leurs propriétés mécaniques, notamment leur consistance. On peut citer à titre d'exemple les procédés de soufflage et de désasphaltage largement décrits dans la littérature.

On peut également citer la viscoréduction correspondant à un procédé de conversion qui met en oeuvre des réactions de craquage thermique sans apport d'hydrogène. La viscoréduction des résidus de distillation du pétrole constitue un traitement supplémentaire de ces résidus apte à fournir une base bitume.

Selon un mode particulier de l'invention, le bitume comprend au moins une première base bitume et au moins une deuxième base bitume, lesdites première et deuxième bases bitume ayant des caractéristiques de stabilité et/ou d'aromaticité des asphaltènes différentes. Le bitume comprend, avantageusement, au moins une première base bitume et une deuxième base bitume. Le bitume est, de préférence, constitué par au moins une première base bitume et une deuxième bases bitume. On peut utiliser deux ou plusieurs deuxièmes bases bitume. Plusieurs premières bases bitume pourront également être utilisées, notamment afin d'ajuster la consistance du bitume, en particulier la pénétrabilité à l'aiguille à 25°C selon la norme EN1426.

Les première et deuxième bases bitume peuvent être de grade dur ou de grade mou. Les première et deuxième bases bitume sont, avantageusement, choisies parmi les bitumes routiers de classes 10/20 à 160/220 et les bitumes spéciaux de toutes classes.

En particulier, le bitume selon l'invention comprend au moins :
- une première base bitume ayant une stabilité intrinsèque S supérieure à 2,5 et/ou un taux de peptisation Sₐ supérieur à 0,60 et,
- une deuxième base bitume ayant une stabilité intrinsèque S inférieure ou égale à 2,50 et/ou un taux de peptisation Sₐ inférieur ou égal à 0,60.

Dans toute la présente demande, les valeurs S et Sₐ sont mesurées selon la norme ASTM D 7157-12.

La méthode de mesure de la stabilité intrinsèque selon la norme ASTM D7157-12 quantifie la stabilité intrinsèque **S** de résidus de distillation du pétrole contenant des asphaltènes. Cette stabilité **S** dépend du caractère aromatique des asphaltènes, indexé par la valeur **Sₐ** et du caractère aromatique du milieu, indexé par la valeur **S₀.** Cette méthode permet ainsi de caractériser les coupes de pétrole issues de procédé de distillation du pétrole. Cette méthode permet, notamment, de différentier les résidus de distillation du pétrole en fonction de leur stabilité intrinsèque **S** et du caractère aromatique des asphaltènes quantifié par le taux de peptisation des asphaltène **Sₐ.**

La valeur minimale de **S** est de 1. Cette valeur 1 indique une forte instabilité, avec une forte tendance des asphaltènes à précipiter. Plus la valeur de **S** est élevée, plus la base bitume est stable avec une faible tendance des asphaltènes à précipiter.

La valeur **Sₐ** est liée à la longueur et au nombre de chaines aromatiques dans les asphaltènes. Plus la valeur **Sₐ** est élevée, plus les asphaltènes dans la base bitume sont peptisables dans un système colloïdal.

Le bitume selon l'invention comprend, de préférence au moins :
- une première base bitume ayant une stabilité intrinsèque S supérieure à 2,5 et un taux de peptisation Sₐ supérieur à 0,60 et,
- une deuxième base bitume ayant une stabilité intrinsèque S inférieure ou égale à 2,50 et un taux de peptisation Sₐ inférieur ou égal à 0,60.

Selon une variante préférée, la première base bitume a une stabilité intrinsèque S supérieure à 3,0 et/ou un taux de peptisation Sₐ supérieur à 0,65 et la deuxième base bitume a une stabilité intrinsèque S inférieure ou égale à 3,0 et/ou un taux de peptisation Sₐ inférieur ou égal à 0,65. Avantageusement, la première base bitume a une stabilité intrinsèque S supérieure à 3,0 et un taux de peptisation Sₐ supérieur à 0,65 et la deuxième base bitume a une stabilité intrinsèque S inférieure ou égale à 3,0 et un taux de peptisation Sₐ inférieur ou égal à 0,65.

Selon une autre variante, la première base bitume a une stabilité intrinsèque S supérieure à 3,5 et/ou un taux de peptisation Sₐ supérieur à 0,7 et la deuxième base bitume a une stabilité intrinsèque S inférieure ou égale à 3,5 et/ou un taux de peptisation Sₐ inférieur ou égal à 0,70. Avantageusement, la première base bitume a une stabilité intrinsèque S supérieure à 3,5 et un taux de peptisation Sₐ supérieur à 0,7 et la deuxième base bitume a une stabilité intrinsèque S inférieure ou égale à 3,5 et un taux de peptisation Sₐ inférieur ou égal à 0,70.

Selon un mode de réalisation particulier, la première base bitume est choisie parmi les résidus de distillation directe et/ou sous vide du pétrole, lesdits résidus étant éventuellement soufflés et/ou désasphaltés.

Avantageusement, la première base bitume est choisie parmi les résidus de distillation sous vide (RSV) des résidus atmosphériques provenant de la distillation directe du pétrole.

Selon un mode de réalisation particulier, la deuxième base bitume est choisie, de préférence, parmi les produits issus de la viscoréduction de résidus de distillation sous vide, lesdits résidus de distillation sous vide provenant de la distillation sous vide de résidus atmosphériques issus de la distillation directe du pétrole.

Les opérations de viscoréduction consistent à craquer thermiquement des fractions lourdes à des températures comprises entre 450°C et 460°C, sans apport d'hydrogène. Ces produits issus de la viscoréduction de résidus de distillation sous vide comprennent des asphaltènes instables à l'état colloïdal relativement aux bitumes conventionnels issus de distillation directe du pétrole (atmosphérique et/ou sous vide). L'instabilité des asphaltènes se traduit généralement par une dégradation des performances à froid. Il est également connu que la présence de résidus de distillation sous vide viscoréduits est responsable de l'apparition de lézardes, de cassures, de fissures, de craquelures et/ou de coupures notamment dans les revêtements routiers utilisant de telles bases bitume issues de résidus de distillation sous vide viscoréduits.

Le pourcentage massique de la deuxième base bitume par rapport à la masse totale de ladite composition est, avantageusement, inférieure ou égale à 50%, de préférence compris entre 25% et 50%, plus préférentiellement entre 25% et 40%.

Si le bitume contient plus d'une deuxième base, le pourcentage massique est calculé par rapport à la somme des quantités des deuxièmes bases bitume et ne dépassera pas de préférence plus de 50%, plus préférentiellement plus de 25% en masse de la masse totale de ladite composition bitume/polymère.

L'adjuvant polymère oléfinique est choisi, de préférence, parmi dans le groupe consistant en (a) les copolymères éthylène/(méth)acrylate de glycidyle ; (b) les terpolymères éthylène/monomère A/monomère B et (c) les copolymères résultant du greffage d'un monomère B sur un substrat polymère.
(a) Les copolymères éthylène/(méth)acrylate de glycidyle sont, avantageusement, choisis parmi les copolymères statistiques ou séquencés, de préférence statistiques, d'éthylène et d'un monomère choisi parmi l'acrylate de glycidyle et le méthacrylate de glycidyle, comprenant de 50% à 99,7% en masse, de préférence de 60% à 95% en masse, plus préférentiellement 60% à 90% en masse d'éthylène.
(b) Les terpolymères sont, avantageusement, choisis parmi les terpolymères statistiques ou séquencés, de préférence statistiques, d'éthylène, d'un monomère A et d'un monomère B.

Le monomère A est choisi parmi l'acétate de vinyle et les acrylates ou méthacrylates d'alkyle en C₁ à C₆.

Le monomère B est choisi parmi l'acrylate de glycidyle et le méthacrylate de glycidyle. Les terpolymères éthylène/monomère A/monomère B comprennent de 0,5% à 40% en masse, de préférence de 5 à 35% masse, plus préférentiellement de 10% à 30% en masse de motifs issus du monomère A et, de 0,5% à 15% en masse, de préférence de 2,5% à 15% en masse de motifs issus du monomère B, le reste étant formé de motifs issus de l'éthylène ;
(c) les copolymères résultent du greffage d'un monomère B choisi parmi l'acrylate de glycidyle et le méthacrylate de glycidyle, sur un substrat polymère. Le substrat polymère consiste en un polymère choisi parmi les polyéthylènes, notamment les polyéthylènes basse densité, les polypropylènes, les copolymères statistiques ou séquencés, de préférence statistiques, d'éthylène et d'acétate de vinyle et les copolymère statistiques ou séquencés, de préférence statistiques, d'éthylène et d'acrylate ou méthacrylate d'alkyle en C₁ à C₆, comprenant de 40% à 99,7% en masse, de préférence de 50% à 99% en masse d'éthylène. Lesdits copolymères greffés comprennent de 0,5% à 15% en masse, de préférence de 2,5% à 15% en masse de motifs greffés issus du monomère B.

L'adjuvant polymère oléfinique est, de préférence, choisi parmi les terpolymères (b) éthylène/monomère A/monomère B décrit ci-dessus.

Avantageusement, l'adjuvant polymère oléfinique est choisi parmi les terpolymères statistiques d'éthylène, d'un monomère A choisi parmi les acrylates ou méthacrylates d'alkyle en C₁ à C₆ et d'un monomère B choisi parmi l'acrylate de glycidyle et le méthacrylate de glycidyle, comprenant de 0,5% à 40% en masse, de préférence de 5 à 35% masse, plus préférentiellement de 10% à 30% en masse de motifs issus du monomère A et, de 0,5% à 15% en masse, de préférence de 2,5% à 15% en masse de motifs issus du monomère B, le reste étant formé de motifs issus de l'éthylène.

L'élastomère peut être choisi parmi les polybutadiène, polyisoprène, polychloroprène, copolymères butadiène/isoprène, polynorbornène, polyisobutylène, caoutchouc butyle, polyéthylène haute densité, polyéthylène basse densité, polypropylène, polybutène, copolymères statistiques éthylène/propylène (EP), terpolymères statistiques éthylène/propylène/diène (EPDM), copolymères éthylène/styrène, copolymères éthylène/butène/styrène.

L'élastomère est, avantageusement, choisi parmi les copolymères statistiques ou séquencés d'un hydrocarbure monovinyl aromatique et d'un diène conjugué.

L'élastomère comprend, de préférence, entre 5 % et 50% en masse, plus préférentiellement entre 15% et 40% en masse d'hydrocarbure monovinyl aromatique.

L'élastomère est, avantageusement, choisi parmi les copolymères statistiques ou séquencés de styrène et d'un diène conjugué.

La masse moléculaire moyenne en masse de l'élastomère est, avantageusement, comprise entre 10 000 et 600 000 daltons, de préférence entre 30 000 et 400 000 daltons.

L'élastomère est, avantageusement, choisi parmi les copolymères statistiques ou séquencés de styrène et d'un diène conjugué tel que butadiène, isoprène, chloroprène, butadiène carboxylé, isoprène carboxylé. On choisira, de préférence, les copolymères statistiques ou séquencés de styrène et de butadiène.

L'élastomère peut consister en un ou plusieurs copolymères choisis parmi les copolymères séquencés, avec ou sans charnière statistique, de styrène et de butadiène, de styrène et d'isoprène, de styrène et de chloroprène, de styrène et de butadiène carboxylé ou encore de styrène et d'isoprène carboxylé.

De préférence, le copolymère de styrène et de diène conjugué est choisi parmi les copolymères di- ou triséquencés de styrène et de butadiène, de styrène et d'isoprène, de styrène et de butadiène carboxylé ou encore de styrène et d'isoprène carboxylé qui ont des teneurs en styrène et des masses moléculaires moyennes en masse situées dans les intervalles définis précédemment.

Selon un mode de réalisation particulier, la composition est une composition bitume/polymère réticulé.

L'élastomère est choisi parmi les élastomères réticulables au soufre. L'élastomère réticulable au soufre utilisé pour préparer des compositions bitume/polymère se retrouve réticulé dans lesdites compositions. Le procédé de fabrication comprend, par conséquent, une étape supplémentaire de réticulation faisant intervenir un agent de couplage donneur de soufre. La composition comprend alors un agent de couplage donneur de soufre en quantité propre à fournir une quantité libre de soufre. La quantité de soufre représente généralement de 0,1% à 20% en masse, de préférence de 1% à 10% en masse de l'élastomère réticulable au soufre dans la composition bitume/polymère.

Selon un mode de réalisation particulier, le procédé de fabrication de la composition bitume/polymère réticulé comprend, par exemple, les étapes successives suivantes :
- on introduit dans un réacteur le bitume, un élastomère réticulable au soufre et l'adjuvant polymère oléfinique,
- le mélange est agité jusqu'à obtention d'un mélange homogène et chauffé à une température comprise entre 100°C et 200°C, de préférence entre 150°C à 200°C, plus préférentiellement entre 160°C et 200°C, pendant une durée d'au moins 10 minutes, de préférence entre 1 heure et 10 heures, plus préférentiellement entre 2 heures et 6 heures,
- on ajoute ensuite un agent de couplage donneur de soufre en quantité propre à fournir une quantité libre de soufre représentant de 0,5% à 10% en masse, de préférence de 1% à 6% en masse, plus préférentiellement de 2% à 5% en masse de l'élastomère réticulable au soufre dans ladite composition,
- on chauffe sous agitation le milieu réactionnel ainsi obtenu à une température comprise entre 100°C et 200°C, de préférence entre 150°C à 200°C, plus préférentiellement entre 160°C et 200°C, pendant une durée d'au moins 10 minutes, de préférence entre 10 minutes et 4 heures, plus préférentiellement entre 10 minutes et 2 heures.

Dans la mise en oeuvre décrite ci-dessus, l'adjuvant polymère oléfinique peut être incorporé au bitume avant ou après l'élastomère réticulable au soufre, une incorporation simultanée pouvant être également envisagée.

Selon une variante, l'élastomère est choisi parmi les élastomères réticulables thermiquement, par exemple, les copolymères styrène/butadiène haut vinyle décrit ci-dessus. Le procédé de fabrication de la composition bitume/polymère réticulé met alors en oeuvre une étape de réticulation thermique de l'élastomère comme décrit par exemple dans le document WO2011013073. Aucun agent de couplage chimique n'est utilisé.

Selon un mode de réalisation particulier, on peut également introduire un agent apte à piéger le sulfure d'hydrogène (H₂S) susceptible d'être relargué lors de la réticulation de la composition bitume/polymère. Cet agent est connu sous le nom anglais de «scavenger» de H₂S. Le scavenger H₂S est ajouté de préférence après l'agent de couplage pour diminuer ou supprimer les dégagements de H₂S. On peut ajouter dans le milieu réactionnel de 0,05% à 2% en masse, de préférence de 0,1% à 1% en masse de scavenger de H₂S, le pourcentage étant calculé par rapport à la quantité totale de la composition bitume/polymère. Après addition du scavenger H₂S, le milieu réactionnel est maintenu sous agitation pendant au moins 10 minutes, généralement entre 10 minutes et 1 heure.

Les agents de couplage donneur de soufre utilisables sont de nature très variée et sont choisis en fonction de l'élastomère à réticuler dans la composition bitume/polymère selon l'invention.
L'agent de couplage donneur de soufre est, avantageusement, choisi dans le groupe formé par le soufre élémentaire, les polysulfures d'hydrocarbyle, les accélérateurs de vulcanisation donneurs de soufre, les mélanges de tels produits entre eux et/ou avec des accélérateurs de vulcanisation non donneurs de soufre.

Les accélérateurs de vulcanisation sont soit des polysulfures d'hydrocarbyle, soit des accélérateurs de vulcanisation donneurs de soufre, soit des accélérateurs de vulcanisation non donneurs de soufre. Les polysulfures d'hydrocarbyle peuvent être choisis parmi ceux qui sont définis dans le brevet FR2528439 cité à titre d'exemple et/ou incorporé par référence dans la présente demande. Les accélérateurs de vulcanisation donneurs de soufre peuvent être choisis parmi les polysulfures de thiurame, comme par exemple, les disulfures de tétrabutylthiurame, les disulfures de tétraéthylthiurame et les disulfures de tétraméthylthiurame. Les accélérateurs de vulcanisation non donneurs de soufre utilisables peuvent être des composés soufrés choisis notamment parmi le mercaptobenzothiazole et ses dérivés, les dithiocarbamates et ses dérivés, et les monosulfures de thiurame et ses dérivés.

On peut citer par exemple le zinc-2-mercaptobenzothiazole, le dibutyldithiocarbamate de zinc, le monosulfure de tétraméthylthiurame. Pour plus de détails sur les accélérateurs de vulcanisation donneurs de soufre et non donneurs de soufre utilisables selon l'invention, on peut se référer aux brevets EP0360656, EP0409683 et FR2528439 cités à titre d'exemple et/ou incorporés par référence dans la présente demande.

On peut également ajouter à la composition bitume/polymère des dopes d'adhésivité et/ou des agents tensioactifs. Ils sont généralement choisis parmi les dérivés d'alkylamines, les dérivés d'alkyl-polyamines, les dérivés d'alkylamidopolyamines, les dérivés d'alkyl amidopolyamines et les dérivés de sels d'ammonium quaternaire, pris seuls ou en mélange. La quantité de dopes d'adhésivité et/ou des agents tensioactifs dans le composition bitume/polymère est, par exemple, comprise entre 0,2% et 2% en masse, de préférence entre 0,5% et 1% en masse par rapport à la masse totale de la composition bitume/polymère.

L'ordre d'introduction des différents constituants n'a pas d'influence sur les propriétés mécaniques et/ou dynamiques de la composition bitume/polymère ainsi obtenue.

En particulier, l'adjuvant polymère oléfinique est incorporé au bitume avant ou après l'élastomère.

Diverses utilisations des compositions bitume/polymère obtenues selon l'invention sont envisagées. En particulier, les compositions bitume/polymère peuvent être utilisées pour la préparation d'un liant bitume/polymère.

Selon un mode de réalisation particulier, un liant bitume/polymère comprend une composition bitume/polymère telle que décrite ci-dessus.

Le liant bitume/polymère selon l'invention peut à son tour être employé pour préparer une association avec des granulats, notamment routiers.

S'agissant des applications routières, l'invention vise notamment des enrobés bitumineux comme matériaux pour la construction et l'entretien des corps de chaussée et de leur revêtement, ainsi que pour la réalisation de tous travaux de voiries.

Par enrobé bitumineux, on entend, un mélange d'un liant bitumineux avec des granulats et éventuellement des charges minérales et/ou synthétiques.

L'enrobé bitumineux comprend un liant bitumineux tel que décrit ci-dessus, et éventuellement des charges minérales et/ou synthétiques, de préférence choisies parmi des fines, du sable, des gravillons et des fraisats de recyclage. Les granulats sont des granulats minéraux et/ou synthétiques, notamment, des fraisats de recyclage, de dimensions supérieures à 2 mm, de préférence comprises entre 2 mm et 20 mm.

Le liant bitume/polymère décrit ci-dessus peut, avantageusement être utilisé pour préparer un enduit superficiel, un enrobé à chaud, un enrobé à froid, un enrobé coulé à froid ou une grave émulsion.

S'agissant des applications routières, l'invention vise également des asphaltes comme matériaux pour fabriquer et recouvrir des trottoirs.

Par asphalte, on entend, un mélange de liant bitumineux avec des charges minérales et/ou synthétiques.

Un asphalte comprend un liant bitumineux tel que décrit ci-dessus et des charges minérales telles que des fines, du sable ou des gravillons et/ou des charges synthétiques. Les charges minérales sont constituées de fines (particules de dimensions inférieures à 0,063 mm), de sable (particules de dimensions comprises entre 0,063 mm et 2 mm) et éventuellement de gravillons (particules de dimensions supérieures à 2 mm, de préférence comprises entre 2 mm et 4 mm).

Les asphaltes présentent 100% de compacité et sont principalement utilisés pour fabriquer et recouvrir des trottoirs, alors que les enrobés possèdent une compacité inférieure à 100% et sont utilisés pour fabriquer des routes. Contrairement aux enrobés, les asphaltes ne sont pas compactés au rouleau lors de leur mise en place.

Un autre aspect de l'invention est l'utilisation d'une composition bitume/polymère dans diverses applications industrielles, notamment pour préparer un revêtement d'étanchéité, une membrane ou une couche d'imprégnation.

S'agissant des applications industrielles des compositions bitumineuses, on peut citer la fabrication de membranes d'étanchéité, de membranes anti-bruit, de membranes d'isolation, des revêtements de surface, des dalles de moquette, des couches d'imprégnation.

### EXEMPLES

Pour mémoire, dans toute la présente demande, les propriétés suivantes des bitumes sont mesurées comme indiqué dans le tableau 1 ci-dessous :

**Tableau 1**

| **Propriété** | **Abréviation** | **Unité** | **Norme de mesure** |
|---|---|---|---|
| **Pénétrabilité à l'aiguille à 25°C** | **P25** | **1/10mm** | **EN 1426** |
| **Température de ramollissement bille et anneau** | **TBA** | °**C** | **EN 1427** |
| **Point de fragilité FRAASS** | **Fraass** | °**C** | **EN 12593** |
| **Retour élastique à 25°C** | **R25** | % | **EN 13398** |
| **Essai de Traction, 5°C, 100mm/min** | **ε max** | % | **EN 13587** |
| **Stabilité intrinsèque des asphaltènes** | | | **ASTM D 7157-12** |
| Stabilité intrinsèque | **S** | - | |
| Taux de peptisation *(solubilité)* des asphaltènes | **Sₐ** | - | |
| Taux de peptisation | **S₀** | - | |

### Bases Bitume

Deux types de bases Bitume sont utilisés, deux bases bitume issues de résidus sous vide de distillation directe du pétrole brut (**RSV**) et une base bitume issue de résidus de distillation sous vide viscoréduits du pétrole brut.

### • Bases Bitume issues de résidus sous vide de distillation directe (RSV): B_{α1} et B_{α2}

- Base Bitume, notée **B**_{α1} correspondant à un bitume de grade 10/20 et de P25 de **12** 1/10mm.
- Base Bitume, notée **B**_{α2} correspondant à un bitume de grade 160/220 et de P25 de **175** 1/10mm.

### • Base Bitume issue de résidus de distillation sous vide viscoréduits (RSV viscoréduits) : B_{β1}

- Base Bitume, notée **B**_{β1} correspondant à un RSV viscoréduits (CAS 92062-05-0, EINECS 295-518-9) de P25 de **56** 1/10mm.

### Mélanges de bases Bitume B_{α3} et B_{β2}

- Mélange de bases Bitume, noté **B**_{α3} correspondant à un mélange des deux bases Bitume **B**_{α1} et **B**_{α2} (RSV) dans des proportions ajustées de manière à obtenir une composition bitumineuse de P25 de **36** 1/10mm.
- Mélange de bases Bitume, noté **B**_{β2} correspondant à un mélange des deux bases Bitume **B**_{α1}, **B**_{α2} (RSV) et d'une base Bitume **B**_{β1} (RSV viscoréduits) dans des proportions ajustées de manière à obtenir une composition bitumineuse ayant une Pénétrabilité P25 comparable à celle contenant la base **B**_{α3}, soit une P25 mesurée de **42** 1/10mm (iso-pénétrabilité).

### • Propriétés des Bases Bitume

- La stabilité intrinsèque des bases Bitume et du mélange de bases Bitume a été mesurée selon la norme ASTM D7157-12.

Les valeurs de stabilité intrinsèque des bases Bitume et du mélange de bases Bitume sont répertoriées dans le tableau 2 suivant :

**Tableau 2**

| | | **B**_{α1} | **B**_{α2} | **B**_{α3} | **B**_{β1} |
|---|---|---|---|---|---|
| %masse **B**_{α1} | | 100 | | 59 | |
| %masse **B**_{α2} | | | 100 | 41 | |
| %masse **B**_{β1} | | | | | 100 |
| Stabilité Intrinsèque ASTM D7157-12 | **Sₐ** | 0,73 | 0,77 | 0,75 | 0,55 |
| | **S₀** | 1,14 | 1,05 | 1,10 | 0,89 |
| | **S** | 4,22 | 4,48 | 4,33 | 1,98 |

La base Bitume **B**_{β1} (RSV viscoréduits) se distingue des bases **B**_{α1}**, B**_{α2} (RSV) et du mélange de bases Bitume **B**_{α3} (RSV) par une stabilité intrinsèque **S** plus faible (1,98) et une valeur du taux de peptisation des asphaltènes Sₐ plus petite (0,55).
En particulier, la base Bitume **B**_{β1} (RSV viscoréduits) a une valeur **S** inférieure à 3 et une valeur **Sₐ** inférieure à 0,65 alors que les bases **B**_{α1}**, B**_{α2} et **B**_{α3} (RSV) ont une valeur **S** supérieure à 3 et une valeur **Sₐ** supérieure à 0,65.
- Les propriétés mécaniques et élastiques des bases Bitume et des mélanges de bases Bitume ont été évaluées. Les résultats sont répertoriés dans le tableau 3 suivant :

**Tableau 3**

| | **B**_{α1} | **B**_{α2} | **B**_{α3} | **B**_{β1} | **B**_{β2} |
|---|---|---|---|---|---|
| %masse **B**_{α1} | 100 | | 59 | | 39 |
| %masse **B**_{α2} | | 100 | 41 | | 36 |
| %masse **B**_{β1} | | | | 100 | 25 |
| P25 (1/10mm) | 12 | 171 | 42 | 56 | 39 |
| TBA (°C) | 63,4 | 39 | 53,6 | 50,6 | 52,6 |
| Fraass (°C) | -8 | -16 | -9 | -10 | -7 |
| ε max (%) | cassant | cassant | cassant | cassant | cassant |

Le point de fragilité Fraass est un indicateur permettant de caractériser la fragilité du bitume à basse température. Plus le point de fragilité Fraass est élevé, plus le bitume est fragile, c'est-à-dire plus le risque d'apparition de fissures à froid est élevé.

Les résultats du tableau 3 montrent qu'à iso-pénétrabilité P25, la différence entre la valeur de Fraass de **B**_{α3} et celle de **B**_{β2} est peu significative. En ajoutant 25% massique d'une base Bitume **B**_{β1} ayant une stabilité intrinsèque **S** égale à 1,98 (inférieure à 3) et un taux de peptisation **Sₐ** de 0,55 (inférieur à 0,65) dans le mélange de bases Bitume **B**_{α3} ayant une stabilité intrinsèque de 4,33 (supérieure à 3) et un taux de peptisation **Sₐ** de 0,75 (supérieur à 0,65), on constate que la variation du point de fragilité Fraass est faible (Δ=2°C). Cette variation n'est pas significative dans la mesure où elle est proche du delta de valeurs de la répétabilité de la méthode EN12593.

### Adjuvant Polymère

- Terpolymère éthylène/acrylate de butyle/méthacrylate de glycidyle dans des proportions massiques, respectivement de 70/21/9 et possédant un indice de fusion MFR (acronyme anglais pour « Melt Flow Rate ») (190°C/2,16 kg) de 8g/10min, calculé selon la norme ASTM D1238- ISO1133.

### Elastomère

- copolymère séquencé styrène/butadiène/styrène, à 30,5% en masse de styrène et à 69,5% en masse de butadiène. La teneur en groupement 1,2-vinyle est de 27,8 % en masse par rapport au poids total de copolymère. Le copolymère a une masse moléculaire en masse (Mw) de 142 500 Daltons et un indice de polydispersité **Iₚ** de 1,09.

### Préparation des compositions bitume/polymère

### • Exemple 1 (témoin) : Préparation d'une composition bitume/ polymère C^{T}_{β25} renfermant un élastomère réticulé au soufre sans adjuvant polymère.

On introduit dans le réacteur :
- 38,6% en masse du bitume **B**_{α1}
- 34,7% en masse du bitume **B**_{α2}
- 24,1 % en masse du bitume **B**_{β1}
- 2,5 % en masse de l'élastomère

Le mélange est agité à haute densité c'est-à-dire à fort taux de cisaillement pour obtenir un mélange homogène à l'échelle du micron et chauffé à 185°C pendant environ 4 heures.

On ajoute ensuite 0,1 % en masse de soufre (soufre en fleur).

Le mélange est agité à faible intensité et chauffé à 185°C pendant 2 heures.

### • Exemple 2 : Préparation d'une composition bitume/ polymère C_{β25} renfermant un élastomère réticulé au soufre et un adjuvant polymère.

La composition bitume/polymère **C**_{β25} est réalisée selon le même procédé de préparation que l'exemple 1 à l'exception du fait que l'on ajoute un adjuvant polymère. Les proportions des différents constituants sont les suivants :
- 40% en masse de la base Bitume **B**_{α1}
- 32,95 % en masse de la base Bitume **B**_{α2}
- 24,2 % en masse de la base Bitume **B**_{β1}
- 2,5 % en masse de l'élastomère
- 0,25 % en masse de l'adjuvant polymère
- 0,1 % en masse de soufre

### • Exemple 3 : Préparation d'une composition bitume/ polymère C_{β50} renfermant un élastomère réticulé au soufre et un adjuvant polymère.

La composition bitume/polymère **C**_{β50} est réalisée selon le même procédé de préparation que l'exemple 2 à l'exception de la quantité de base Bitume **B**_{β1} ajoutée. Les proportions des différents constituants sont les suivants :
- 28,65% en masse de la base Bitume **B**_{α1}
- 20 % en masse de la base Bitume **B**_{α2}
- 48,5 % en masse de la base Bitume **B**_{β1}
- 2,5 % en masse de l'élastomère
- 0,25 % en masse de l'adjuvant polymère
- 0,1 % en masse de soufre

### • Exemple 4 (témoin) : Préparation d'une composition bitume/ polymère C^{T}_{β0} renfermant un élastomère réticulé au soufre et un adjuvant polymère.

La composition bitume/polymère **C**^{T}_{β0} est réalisée selon le même procédé de préparation que l'exemple 2 à l'exception du fait que l'on n'utilise pas de base Bitume **B**_{β1}. Les proportions des différents constituants sont les suivants :
- 50,5% en masse du bitume **B**_{α1}
- 46,65 % en masse du bitume **B**_{α2}
- 2,5 % en masse de l'élastomère
- 0,25 % en masse de l'adjuvant polymère
- 0,1 % en masse de soufre

### Propriétés des compositions bitume/polymère

Les caractéristiques des différentes compositions bitume/polymère mesurées selon les normes citées ci-dessus sont consignées dans le tableau 4 suivant :

**Tableau 4**

| Composition Bitume/polymère | **C**^{T}_{β0} | **C**^{T}_{β25} | **C**_{β25} | **C**_{β50} |
|---|---|---|---|---|
| %masse **B**_{β1} | 0 | 24,1 | 24,2 | 48,5 |
| %masse de l'adjuvant polymère | 0,25 | 0 | 0,25 | 0,25 |
| P25 (1/10mm) | 32 | 35 | 35 | 35 |
| TBA (°C) | 63,4 | 58,4 | 62,5 | 64 |
| Fraass (°C) | -9 | -10 | -16 | -13 |
| R25 (%) | 75 | 73 | 80,5 | 77 |
| ε max (%) | 640 | 693 | 680 | cassant |

Par comparaison des résultats de Fraass du **C**^{T}_{β0} et du **B**_{α3}, on constate que l'ajout de l'adjuvant polymère n'induit aucune variation du point Fraass (Δ₁= Fraass **B**_{α3}(-9) - Fraass **C**^{T}_{β0}(-9) = 0°C).

Par comparaison des résultats de Fraass du **C**^{T}_{β25} et du **B**_{β2}, on observe une diminution de 3°C du Fraass due à la présence de l'élastomère réticulé dans le bitume (Δ₂= Fraass **B**_{β2}(-7) - Fraass **C**^{T}_{β25}(-10)= 3°C).

Par comparaison des résultats de Fraass du **C**_{β25} et du **B**_{β2,} on observe une diminution du Fraass de 9°C (Δ₃= Fraass **B**_{β2}(-7) - Fraass **C**_{β25}(-16) = 9°C).

L'ajout indépendamment soit de la base Bitume **B**_{β1} soit de l'adjuvant polymère ne modifie pas de façon significative la valeur du Fraass d'une composition bitume/polymère réticulé. On obtient des valeurs de Fraass respectivement de -9°C et -10°C pour les compositions bitume/polymère réticulé **C**^{T}_{β0} et **C**^{T}_{β25}.

En revanche, de façon surprenante, on constate que l'ajout d'une combinaison de la base Bitume **B**_{β1} et de l'adjuvant polymère améliore significativement le Fraass d'une composition bitume/polymère réticulé, en particulier pour une concentration massique de base Bitume **B**_{β1} inférieure ou égale à 50%. On atteint, par exemple, une valeur de Fraass de -16°C pour la composition bitume/polymère réticulé **C**_{β25}. La différence de Fraass Δ₃ (9°C) est largement supérieure à la somme des différences Δ₁ + Δ₂ (3°C). Il existe donc un effet synergique de la base Bitume **B**_{β1} (RSV viscoréduits) avec l'adjuvant polymère qui permet d'améliorer les propriétés mécaniques à froid, en particulier le Fraass.

Sans être lié par cette théorie, il semblerait que l'adjuvant polymère oléfinique interagisse avec la deuxième base bitume de manière à améliorer la consistance tout en évitant les problèmes de fissuration inhérents à la présence d'une base bitume à forte teneur en asphaltènes, en particulier présentant une instabilité des asphaltènes. En particulier, cette synergie permet d'améliorer les propriétés mécaniques à froid sans détériorer les autres propriétés mécaniques et élastiques, en particulier la TBA et la P25.

## Revendications

1. Composition bitume/polymère comprenant du bitume, un élastomère et un adjuvant polymère oléfinique fonctionnalisé par au moins des groupements fonctionnels glycidyle, **caractérisée en ce que** le bitume comprend au moins :
- une première base bitume ayant une stabilité intrinsèque S supérieure à 2,5 et/ou un taux de peptisation Sₐ supérieur à 0,60 et,
- une deuxième base bitume ayant une stabilité intrinsèque S inférieure ou égale à 2,50 et/ou un taux de peptisation Sₐ inférieur ou égal à 0,60,
lesdites valeurs S et Sₐ étant mesurées selon la norme ASTM D 7157-12.

2. Composition selon la revendication 1, **caractérisée en ce que** le bitume comprend au moins :
- une première base bitume ayant une stabilité intrinsèque S supérieure à 3,0 et/ou un taux de peptisation Sₐ supérieur à 0,65 et,
- une deuxième base bitume ayant une stabilité intrinsèque S inférieure ou égale à 3,0 et/ou un taux de peptisation Sₐ inférieur ou égal à 0,65,
lesdites valeurs S et Sₐ étant mesurées selon la norme ASTM D 7157-12.

3. Composition selon l'une des revendications 1 et 2, **caractérisée en ce que** le pourcentage massique de la deuxième base bitume par rapport à la masse totale de ladite composition est inférieure ou égale à 50%, de préférence compris entre 25% et 50%, plus préférentiellement entre 25% et 40%.

4. Composition selon l'une quelconque des revendications 1 à 3, **caractérisée en ce que** la première base bitume est choisie parmi les résidus de distillation directe et/ou sous vide du pétrole, lesdits résidus étant éventuellement soufflés et/ou désasphaltés.

5. Composition selon la revendication 4, **caractérisée en ce que** la première base bitume est choisie parmi les résidus de distillation sous vide (RSV) des résidus atmosphériques provenant de la distillation directe du pétrole.

6. Composition selon l'une quelconque des revendications 1 à 5, **caractérisée en ce que** la deuxième base bitume est choisie parmi les produits issus de la viscoréduction de résidus de distillation sous vide (RVS viscoréduits), lesdits résidus de distillation sous vide (RSV) provenant de la distillation sous vide de résidus atmosphériques issus de la distillation directe du pétrole.

7. Composition selon l'une quelconque des revendications 1 à 6, **caractérisée en ce qu'**elle comprend entre 0,05% et 15% en masse de l'adjuvant polymère oléfinique par rapport à la masse totale de ladite composition.

8. Composition selon l'une quelconque des revendications 1 à 7, **caractérisée en ce que** l'adjuvant polymère oléfinique est choisi parmi dans le groupe consistant en :
(a) les copolymères, statistiques ou séquencés, d'éthylène et d'un monomère choisi parmi l'acrylate de glycidyle et le méthacrylate de glycidyle, comprenant de 50% à 99,7% en masse d'éthylène;
(b) les terpolymères, statistiques ou séquencés, d'éthylène, d'un monomère A choisi parmi l'acétate de vinyle et les acrylates ou méthacrylates d'alkyle en C₁ à C₆ et d'un monomère B choisi parmi l'acrylate de glycidyle et le méthacrylate de glycidyle, comprenant de 0,5% à 40% en masse de motifs issus du monomère A et, de 0,5% à 15% en masse de motifs issus du monomère B, le reste étant formé de motifs issus de l'éthylène ; et
(c) les copolymères résultant du greffage d'un monomère B choisi parmi l'acrylate de glycidyle et le méthacrylate de glycidyle, sur un substrat consistant en un polymère choisi parmi les polyéthylènes, les polypropylènes, les copolymères statistiques ou séquencés d'éthylène et d'acétate de vinyle et les copolymère statistiques ou séquencés d'éthylène et d'acrylate ou méthacrylate d'alkyle en C₁ à C₆, comprenant de 40% à 99,7% en masse d'éthylène, lesdits copolymères greffés comprenant de 0,5% à 15% en masse de motifs greffés issus du monomère B.

9. Composition selon la revendication 8, **caractérisée en ce que** l'adjuvant polymère oléfinique est choisi parmi les terpolymères statistiques d'éthylène, d'un monomère A choisi parmi les acrylates ou méthacrylates d'alkyle en C₁ à C₆ et d'un monomère B choisi parmi l'acrylate de glycidyle et le méthacrylate de glycidyle, comprenant de 0,5% à 40% en masse de motifs issus du monomère A et, de 0,5% à 15% en masse de motifs issus du monomère B, le reste étant formé de motifs issus de l'éthylène.

10. Composition selon l'une quelconque des revendications 1 à 9, **caractérisée en ce qu'**elle comprend entre 0,5% à 10% en masse d'élastomère par rapport à la masse totale de ladite composition.

11. Composition selon l'une quelconque des revendications 1 à 10, **caractérisée en ce que** l'élastomère est choisi parmi les copolymères statistiques ou séquencés d'un hydrocarbure monovinyl aromatique et d'un diène conjugué, de préférence parmi les copolymères statistiques ou séquencés de styrène et d'un diène conjugué.

12. Procédé de préparation d'une composition bitume/polymère, **caractérisé en ce qu'**on met en contact, en opérant à des températures comprises entre 100°C et 200°C et sous agitation pendant une durée d'au moins 10 minutes :
- du bitume,
- entre 0,5% et 10% en masse d'un élastomère,
- entre 0,05% et 15% en masse d'un adjuvant polymère oléfinique,
Lesdits bitume, élastomère et adjuvant polymère oléfinique étant tels que définis dans l'une quelconque des revendications 1 à 11.

13. Procédé selon la revendication 12, **caractérisé en ce que** l'élastomère est choisi parmi les élastomères réticulables au soufre et **en ce que** le procédé comprend la réticulation dudit élastomère par un agent de couplage donneur de soufre ajouté en quantité propre à fournir de 0,1% à 20% en masse de soufre libre par rapport à la masse d'élastomère réticulable au soufre dans ladite composition.

14. Procédé selon la revendication 13, **caractérisé en ce que** l'agent de couplage donneur de soufre est choisi dans le groupe consistant en le soufre élémentaire, les polysulfures d'hydrocarbyle, les accélérateurs de vulcanisation donneurs de soufre, les mélanges de tels produits entre eux et/ou avec des accélérateurs de vulcanisation non donneurs de soufre.

15. Utilisation d'une composition bitume/polymère selon l'une quelconque des revendications 1 à 11, pour préparer un revêtement d'étanchéité, une membrane ou une couche d'imprégnation, un liant/bitume/polymère, un asphalte, un enrobé bitumineux.

## Patentansprüche

1. Bitumen/Polymer-Zusammensetzung, umfassend Bitumen, ein Elastomer und ein Olefinpolymer-Adjuvans, das mindestens durch funktionelle Glycidyl-Gruppen funktionalisiert ist, **dadurch gekennzeichnet, dass** das Bitumen mindestens umfasst:
- eine erste Bitumenbasis mit einer intrinsischen Stabilität S von größer als 2,5 und/oder einer Peptisierungsrate Sₐ von größer als 0,60, und
- eine zweite Bitumenbasis mit einer intrinsischen Stabilität S von kleiner oder gleich 2,50 und/oder einer Peptisierungsrate Sₐ von kleiner oder gleich 0,60,
wobei die Werte S und Sₐ gemäß der Norm ASTM D 7157-12 gemessen werden.

2. Zusammensetzung nach Anspruch 1, **dadurch gekennzeichnet, dass** das Bitumen mindestens umfasst:
- eine erste Bitumenbasis mit einer intrinsischen Stabilität S von größer als 3,0 und/oder einer Peptisierungsrate Sₐ von größer als 0,65, und
- eine zweite Bitumenbasis mit einer intrinsischen Stabilität S von kleiner oder gleich 3,0 und/oder einer Peptisierungsrate Sₐ von kleiner oder gleich 0,65,
wobei die Werte S und Sₐ gemäß der Norm ASTM D 7157-12 gemessen werden.

3. Zusammensetzung nach einem der Ansprüche 1 und 2, **dadurch gekennzeichnet, dass** der Masseprozentsatz der zweiten Bitumenbasis im Verhältnis zur Gesamtmasse der Zusammensetzung kleiner oder gleich 50 % ist, vorzugsweise zwischen 25 % und 50 %, bevorzugter zwischen 25 % und 40 % beträgt.

4. Zusammensetzung nach einem der Ansprüche 1 bis 3, **dadurch gekennzeichnet, dass** die erste Bitumenbasis aus den Rückständen einer direkten und/oder Vakuumdestillation von Erdöl ausgewählt ist, wobei die Rückstände gegebenenfalls geblasen und/oder deasphaltiert werden.

5. Zusammensetzung nach Anspruch 4, **dadurch gekennzeichnet, dass** die erste Bitumenbasis aus den Rückständen einer Vakuumdestillation (RSV) der atmosphärischen Rückstände, die aus der direkten Destillation von Erdöl erhalten werden, ausgewählt ist.

6. Zusammensetzung nach einem der Ansprüche 1 bis 5, **dadurch gekennzeichnet, dass** die zweite Bitumenbasis aus den Produkten ausgewählt ist, die von der Viskoreduktion von Rückständen einer Vakuumdestillation (viskoreduzierten RVS) stammen, wobei die Rückstände einer Vakuumdestillation (RSV) aus der Vakuumdestillation von atmosphärischen Rückständen erhalten werden, die von der direkten Destillation von Erdöl stammen.

7. Zusammensetzung nach einem der Ansprüche 1 bis 6, **dadurch gekennzeichnet, dass** diese zwischen 0,05 Masse-% und 15 Masse-% des Olefinpolymer-Adjuvans im Verhältnis zur Gesamtmasse der Zusammensetzung umfasst.

8. Zusammensetzung nach einem der Ansprüche 1 bis 7, **dadurch gekennzeichnet, dass** das Olefinpolymer-Adjuvans ausgewählt ist aus der Gruppe bestehend aus:
(a) statistischen oder sequenzierten Copolymeren von Ethylen und einem Monomer, ausgewählt aus Glycidylacrylat und Glycidylmethacrylat, umfassend 50 Masse-% bis 99,7 Masse-% Ethylen;
(b) statistischen oder sequenzierten Terpolymeren von Ethylen, einem Monomer A, ausgewählt aus Vinylacetat und C₁-C₆-Alkylacrylaten oder -methacrylaten, und einem Monomer B, ausgewählt aus Glycidylacrylat und Glycidylmethacrylat, umfassend 0,5 Masse-% bis 40 Masse-% Einheiten, die vom Monomer A stammen, und 0,5 Masse-% bis 15 Masse-% Einheiten, die vom Monomer B stammen, wobei der Rest aus Einheiten gebildet ist, die von Ethylen stammen; und
(c) Copolymeren, die erhalten werden durch das Pfropfen eines Monomers B, ausgewählt aus Glycidylacrylat und Glycidylmethacrylat, auf ein Substrat, bestehend aus einem Polymer, ausgewählt aus Polyethylenen, Polypropylenen, statistischen oder sequenzierten Copolymeren von Ethylen und Vinylacetat, und statistischen oder sequenzierten Copolymeren von Ethylen und C₁-C₆-Alkylacrylat oder -methacrylat, umfassend 40 Masse-% bis 99,7 Masse-% Ethylen, wobei die gepfropften Copolymere 0,5 Masse-% bis 15 Masse-% gepfropfte Einheiten, die vom Monomer B stammen, umfassen.

9. Zusammensetzung nach Anspruch 8, **dadurch gekennzeichnet, dass** das Olefinpolymer-Adjuvans ausgewählt ist aus statistischen Terpolymeren von Ethylen, einem Monomer A, ausgewählt aus C₁-C₆-Alkylacrylaten oder -methacrylaten, und einem Monomer B, ausgewählt aus Glycidylacrylat und Glycidylmethacrylat, umfassend 0,5 Masse-% bis 40 Masse-% Einheiten, die vom Monomer A stammen, und 0,5 Masse-% bis 15 Masse-% Einheiten, die vom Monomer B stammen, wobei der Rest aus Einheiten gebildet ist, die von Ethylen stammen.

10. Zusammensetzung nach einem der Ansprüche 1 bis 9, **dadurch gekennzeichnet, dass** diese zwischen 0,5 Masse-% und 10 Masse-% eines Elastomers im Verhältnis zur Gesamtmasse der Zusammensetzung umfasst.

11. Zusammensetzung nach einem der Ansprüche 1 bis 10, **dadurch gekennzeichnet, dass** das Elastomer ausgewählt ist aus statistischen oder sequenzierten Copolymeren eines aromatischen Monovinylkohlenwasserstoffs und eines konjugierten Diens, vorzugsweise aus den statistischen oder sequenzierten Copolymeren von Styrol und einem konjugierten Dien.

12. Verfahren zur Herstellung einer Bitumen/Polymer-Zusammensetzung, **dadurch gekennzeichnet, dass**, indem bei Temperaturen zwischen 100°C und 200°C und unter Rühren während einer Dauer von mindestens 10 Minuten gearbeitet wird:
- Bitumen,
- zwischen 0,5 Masse-% und 10 Masse-% eines Elastomers,
- zwischen 0,05 Masse-% und 15 Masse-% eines Olefinpolymer-Adjuvans,
in Berührung gebracht werden,
wobei das Bitumen, das Elastomer und das Olefinpolymer-Adjuvans wie in einem der Ansprüche 1 bis 11 definiert sind.

13. Verfahren nach Anspruch 12, **dadurch gekennzeichnet, dass** das Elastomer aus den mit Schwefel vernetzbaren Elastomeren ausgewählt wird, und dadurch, dass das Verfahren die Vernetzung des Elastomers mit einem Schwefeldonator-Kopplungsmittel umfasst, das in einer geeigneten Menge zugesetzt wird, um von 0,1 Masse-% bis 20 Masse-% freien Schwefel im Verhältnis zur Masse des mit Schwefel vernetzbaren Elastomers in der Zusammensetzung zu liefern.

14. Verfahren nach Anspruch 13, **dadurch gekennzeichnet, dass** das Schwefeldonator-Kopplungsmittel ausgewählt wird aus der Gruppe bestehend aus elementarem Schwefel, Hydrocarbylpolysulfiden, Schwefeldonator-Vulkanisationsbeschleunigern, Mischungen solcher Produkte untereinander und/oder mit Nicht-Schwefeldonator-Vulkanisationsbeschleunigern.

15. Verwendung einer Bitumen/Polymer-Zusammensetzung nach einem der Ansprüche 1 bis 11, zur Herstellung einer Dichtungsbeschichtung, einer Membran oder einer Schicht zur Imprägnierung, eines Bindemittels/Bitumens/Polymers, eines Asphalts, eines bituminösen Überzugs.

## Claims

1. Bitumen/polymer composition comprising bitumen, an elastomer and an olefinic polymer adjuvant functionalized by at least glycidyl functional groups, **characterized in that** the bitumen comprises at least:
- a first bitumen base having an intrinsic stability S of greater than 2.5 and/or a degree of peptization Sₐ of greater than 0.60, and
- a second bitumen base having an intrinsic stability S of less than or equal to 2.50 and/or a degree of peptization Sₐ of less than or equal to 0.60,
said values S and Sₐ being measured according to the standard ASTM D 7157-12.

2. Composition according to Claim 1, **characterized in that** the bitumen comprises at least:
- a first bitumen base having an intrinsic stability S of greater than 3.0 and/or a degree of peptization Sₐ of greater than 0.65, and
- a second bitumen base having an intrinsic stability S of less than or equal to 3.0 and/or a degree of peptization Sₐ of less than or equal to 0.65,
said values S and Sₐ being measured according to the standard ASTM D 7157-12.

3. Composition according to either of Claims 1 and 2, **characterized in that** the percentage by weight of the second bitumen base, with respect to the total weight of said composition, is less than or equal to 50%, preferably of between 25% and 50% and more preferably between 25% and 40%.

4. Composition according to any one of Claims 1 to 3, **characterized in that** the first bitumen base is chosen from residues from the direct and/or vacuum distillation of oil, said residues optionally being blown and/or deasphalted.

5. Composition according to Claim 4, **characterized in that** the first bitumen base is chosen from the residues (VR) from the vacuum distillation of the atmospheric residues originating from the direct distillation of oil.

6. Composition according to any one of Claims 1 to 5, **characterized in that** the second bitumen base is chosen from the products resulting from the visbreaking of vacuum distillation residues (visbroken VR), said vacuum distillation residues (VR) originating from the vacuum distillation of atmospheric residues resulting from the direct distillation of oil.

7. Composition according to any one of Claims 1 to 6, **characterized in that** it comprises between 0.05% and 15% by weight of the olefinic polymer adjuvant, with respect to the total weight of said composition.

8. Composition according to any one of Claims 1 to 7, **characterized in that** the olefinic polymer adjuvant is chosen from the group consisting of:
(a) random or block copolymers of ethylene and of a monomer chosen from glycidyl acrylate and glycidyl methacrylate, comprising from 50% to 99.7% by weight of ethylene;
(b) random or block terpolymers of ethylene, of a monomer A chosen from vinyl acetate and C₁ to C₆ alkyl acrylates or methacrylates and of a monomer B chosen from glycidyl acrylate and glycidyl methacrylate, comprising from 0.5% to 40% by weight of units resulting from the monomer A and from 0.5% to 15% by weight of units resulting from the monomer B, the remainder being formed of units resulting from the ethylene; and
(c) copolymers resulting from the grafting of a monomer B, chosen from glycidyl acrylate and glycidyl methacrylate, to a substrate consisting of a polymer chosen from polyethylenes, polypropylenes, random or block copolymers of ethylene and of vinyl acetate and random or block copolymers of ethylene and of C₁ to C₆ alkyl acrylate or methacrylate, comprising from 40% to 99.7% by weight of ethylene, said grafted copolymers comprising from 0.5% to 15% by weight of grafted units resulting from the monomer B.

9. Composition according to Claim 8, **characterized in that** the olefinic polymer adjuvant is chosen from random terpolymers of ethylene, of a monomer A chosen from C₁ to C₆ alkyl acrylates or methacrylates and of a monomer B chosen from glycidyl acrylate and glycidyl methacrylate, comprising from 0.5% to 40% by weight of units resulting from the monomer A and from 0.5% to 15% by weight of units resulting from the monomer B, the remainder being formed of units resulting from the ethylene.

10. Composition according to any one of Claims 1 to 9, **characterized in that** it comprises between 0.5% and 10% by weight of elastomer, with respect to the total weight of said composition.

11. Composition according to any one of Claims 1 to 10, **characterized in that** the elastomer is chosen from random or block copolymers of a monovinylaromatic hydrocarbon and of a conjugated diene, preferably from random or block copolymers of styrene and of a conjugated diene.

12. Process for the preparation of a bitumen/polymer composition, **characterized in that** the following are brought into contact, the operation being carried out at temperatures of between 100°C and 200°C and with stirring for a period of time of at least 10 minutes:
- bitumen,
- between 0.5% and 10% by weight of an elastomer,
- between 0.05% and 15% by weight of an olefinic polymer adjuvant,
said bitumen, said elastomer and said olefinic polymer adjuvant being as defined in any one of Claims 1 to 11.

13. Process according to Claim 12, **characterized in that** the elastomer is chosen from sulfur-crosslinkable elastomers and **in that** the process comprises the crosslinking of said elastomer by a sulfur-donating coupling agent added in an amount capable of providing from 0.1% to 20% by weight of free sulfur with respect to the weight of sulfur-crosslinkable elastomer in said composition.

14. Process according to Claim 13, **characterized in that** the sulfur-donating coupling agent is chosen from the group consisting of elemental sulfur, hydrocarbyl polysulfides, sulfur-donating vulcanization accelerators and the mixtures of such products with one another and/or with non-sulfur-donating vulcanization accelerators.

15. Use of a bitumen/polymer composition according to any one of Claims 1 to 11 to prepare a leaktight coating, a membrane or a seal coat, a bitumen/polymer binder, an asphalt, a bituminous mix.
